# EUROPÄISCHE PATENTSCHRIFT

(11) **EP 4 476 536 B1**
(45) Veröffentlichungstag und Bekanntmachung des Hinweises auf die Patenterteilung: **31.12.2025**
(21) Anmeldenummer: 23705963.9
(22) Anmeldetag: 07.02.2023
(51) Int. Cl.: G01N 25/72, B23K 11/11

(54) **VERFAHREN ZUR ZERSTÖRUNGSFREIEN PRÜFUNG EINER VERBINDUNGSSTELLE IN EINEM BAUTEILVERBUND**
METHOD FOR NON-DESTRUCTIVELY TESTING A CONNECTION POINT IN A COMPONENT ASSEMBLY
PROCÉDÉ DE CONTRÔLE NON DESTRUCTIF D'UN POINT DE RACCORDEMENT DANS UN ASSEMBLAGE DE COMPOSANTS

(30) Priorität: 08.02.2022 DE 102022102940
(43) Veröffentlichungstag der Anmeldung: 18.12.2024
(73) Patentinhaber: EJOT SE & Co. KG, 57319 Bad Berleburg (DE)
(72) Erfinder: MAIWALD, Mario, 99831 Creuzburg (DE); WERKMEISTER, Marco, 99887 Leinatal / Schoenau v.d.W (DE); MUELLER, Toni, 99867 Gotha (DE)
(74) Vertreter: Puschmann Borchert Kaiser Klettner Patentanwälte Partnerschaft mbB
(86) Internationale Anmeldenummer: PCT/EP2023/052894
(87) Internationale Veröffentlichungsnummer: WO 2023/152098

(56) Entgegenhaltungen:
- DE-A1- 102011 114 547
- JP-A- H10 318 956
- US-A1- 2003 106 376
- US-A1- 2006 001 430

## Beschreibung

Die Erfindung betrifft ein Verfahren zur zerstörungsfreien Prüfung einer Verbindungsstelle in einem Bauteilverbund gemäß der im Oberbegriff des Anspruches 1 angegebenen Art.

Zerstörungsfreie Prüfverfahren von stoffschlüssigen Verbindungsstellen sind bereits bekannt. Diese basieren vorzugsweise auf dem Prinzip der Thermographie. Der Bauteilverbund wird durch eine Anregungsquelle erhitzt und aufgrund des unterschiedlichen Temperaturverhaltens der Bauteile und der Verbindungsstelle lassen sich Aussagen über die Verbindungsstelle treffen. Das Temperaturverhalten wird dabei vorzugsweise durch eine Wärmebildkamera aufgenommen. Durch ein mit der Anregungsquelle und der Wärmebildkamera verbundenes Auswertesystem erfolgt die Auswertung und Klassifizierung der Verbindungsstellen.

Die DE 10 2006 057 802 A1 offenbart ein Verfahren und ein Prüfsystem zur zerstörungsfreien Prüfung von Widerstandspressschweißverbindungen. Die stoffschlüssige Widerstandspressschweißverbindung wird durch eine Blitzlampe impulsartig angeregt. Das Auswertesystem umfasst dabei eine Thermographie-Kamera, die das Temperaturverhalten der stoffschlüssigen Verbindung aufnimmt und auf Basis des Temperaturverhaltens eine Analyse des zeitlichen Verlaufs der empfangenen Lichtintensität durchführt.

Um eine bessere örtliche Auflösung zu generieren, wird der Kamerabereich, in dem sich die stoffschlüssige Verbindung befindet, in mehrere Kamerapixel aufgeteilt, indem der Verlauf jedes Kamerapixels analysiert wird. Die Auswertung und Klassifizierung erfolgt anhand von zeitlich abhängigen Detektoreinheiten. Stoffschlüssige Verbindungen mit zu geringer Anbindungsstärke, wobei jedem Kamerapixel über einem bestimmten Schwellenwert an Detektoreinheiten ein "Gut"-Wert zugeordnet wird, werden durch eine zu geringe Gesamtfläche der "Gut"-Werte in Bezug auf einen anderen Schwellenwert ermittelt. Die Fläche wird zu einem Zeitpunkt 200ms nach der Anregung bestimmt.

Durch dieses Prüfverfahren kann die Größe bzw. die wärmeleitende Anbindung eines Pressschweißpunktes, der zwei übereinanderliegende Bleche miteinander verbindet, ermittelt werden, indem die Gesamtfläche, in der eine ausreichende Schweißung vorliegt, zu einem bestimmten Zeitpunkt erfasst wird. Die Messung der Absolut-Temperatur erfolgt zu einem bestimmten Zeitpunkt, an dem die Wärmestrahlung über den Schweißpunkt die Oberfläche der Decklage erreicht hat.

Weitere Verfahren zur zerstörungsfreien Prüfung von stoffschlüssigen Verbindungen durch die Auswertung der Intensitätsverläufe über die Zeit sind bekannt. Nur der Vollständigkeit halber sei auf die US2003/106376, die DE 10 2007 042 341 A1 und die DE 10 2007 050 005 A1 verwiesen.

Die bekannten Prüfungsverfahren beziehen sich hauptsächlich auf Punktschweißverbindungen bzw. Verklebungen. Die Verbindungsstellen sind dabei stoffschlüssig und im Wesentlichen homogen ausgebildet.

Des Weiteren sind bekannte Prüfungsverfahren vorzugsweise für eine genaue, zeitintensive, feine Klassifizierung vorgesehen, wobei das Prüfsystem jeweils nur für bestimmte Einsatzbedingungen ausgebildet ist.

Es sind somit zerstörungsfreie Prüfverfahren für eine Schweißverbindung, insbesondere Punktschweißungen, zweier Bauteillagen, insbesondere aus Stahl, bekannt.

Es ist nunmehr wünschenswert, auch die Qualität von Mischbauteilverbindungen zuverlässig zerstörungsfrei bewerten zu können. Bei Mischbauteilverbindungen werden regelmäßig zwei Bauteillagen aus unterschiedlichen Werkstoffen mittels eines Verbindungselements verbunden. Bei solchen Verbindungen kommt es nicht wie bei den herkömmlichen Schweißpunktverbindungen auf die Qualität und die Größe der Kontaktstelle zwischen den beiden Bauteilen an, sondern auch auf den Übergang zwischen den beiden Bauteilen und dem Verbindungselement.

Beispielsweise führt ein schlechter Kontakt zwischen dem Kopf des Verbindungselements und der oberen Bauteillage - Decklage - zu einer mangelhaften Übertragung der Anpresskraft als auch zu einer mangelnden Dichtigkeit der Verbindung. Ein solcher Defekt kann durch eine rein optische Prüfung festgestellt werden.

Zudem ist für die Qualität einer solchen Mischbauverbindung ausschlaggebend, dass eine ausreichende Festigkeit zwischen dem Verbindungselement und der unteren Bauteillage, der Basislage, vorliegt. Diese Eigenschaft kann nicht rein optisch ausgewertet werden, da die Verbindungsstelle innerhalb des Bauteilverbunds liegt.

Der Erfindung liegt die Aufgabe zugrunde, ein Verfahren zur zerstörungsfreien Prüfung einer solchen Verbindungsstelle in einem Bauteilverbund gemäß der im Oberbegriff des Anspruches 1 genannten Art anzugeben, mit der die Qualität der Verbindung bezüglich der oben genannten Aspekte ausgewertet werden kann.

Diese Aufgabe wird für ein Verfahren zur zerstörungsfreien Prüfung einer Verbindungsstelle in einem Bauteilverbund durch die kennzeichnenden Merkmale des Anspruches 1 in Verbindung mit den Oberbegriffsmerkmalen gelöst.

Die Unteransprüche bilden vorteilhafte Weiterbildungen der Erfindungen.

Das Temperaturverhalten des Bauteilverbunds ändert sich durch die unterschiedliche geometrische Ausprägung des Bauteilverbunds. Des Weiteren führen Inhomogenitäten, insbesondere Luftspalten zwischen der Basislage und der Decklage und zwischen dem Verbindungselement und der Decklage und Fehlstellen, beispielsweise Risse, zu einer unterschiedlich ausgeprägten Wärmeleitung mit einer zeitlichen und einer lokalen Abhängigkeit im Bauteilverbund.

In bekannter Weise umfasst der zu prüfende Bauteilverbund eine Basislage und zumindest eine Decklage und ein Verbindungselement mit einem Kopf und einem Schaft. Die Verbindungsstelle weist eine Verbindung zwischen dem Schaft des Verbindungselements und der Basislage auf. Das Verbindungselement ist formschlüssig mit der Decklage verbunden und drückt diese mit ihrem Kopf an die Basislage an.

Das Verbindungselement weist dabei eine geringere Wärmeleitfähigkeit als die Decklage auf. Bevorzugt kann auch die Basislage eine geringere Wärmeleitfähigkeit aufweisen. Dies ist insbesondere bei Stahl-Aluminiumverbindungen erfüllt, wie sie in vielen Bereichen im Leichtbau eingesetzt werden.

Der Erfindung liegt die Erkenntnis zu Grunde, dass sich die Qualität der Verbindung von der "Wärmeleitfähigkeit" der Bauteilverbindung, nämlich die Wärmeleitung von der Basislage über die Verbindungsstelle des Verbindungselements mit der Basislage und der Decklage und dem Anschluss des Kopfes an die Decklage, beurteilen lässt.

Die erfindungsgemäße Prüfung einer, wie zuvor beschriebenen Bauteilverbindung, erfolgt entsprechend mittels einer Wärmebildkamera und einem auf der Wärmebildkamera gegenüberliegenden Seite des Bauteilverbunds angeordneten Induktor. Der Induktor regt über eine Wirkfläche die Basislage zu einem Anregungszeitpunkt mittels eines Anregungsimpulses induktiv an.

Zu einem ersten Erfassungszeitpunkt wird ein Referenzbild der Verbindungsstelle mit der Wärmebildkamera aufgenommen, in dem der Kopf als Kopffläche abgebildet ist. Zu einem zweiten Erfassungszeitpunkt wird ein Prüfbild analog zum Referenzbild aufgenommen.

Der zweite Erfassungszeitpunkt liegt nach dem ersten Erfassungszeitpunkt und eine vordefinierte Zeitspanne nach dem Anregungszeitpunkt. Der zweite Erfassungszeitpunkt stellt insbesondere den Zeitpunkt dar, an dem der Wärmeeintrag an der Kopffläche einer "OK"-Verbindung, der über die Decklage verläuft, an der Kopffläche des Verbindungselements messbar ist. Insbesondere kann der Wärmeeintrag, der über die Decklage verläuft, den Wärmeeintrag, der über den Schaft des Verbindungselements vermittelt wird, zu diesem Zeitpunkt noch übersteigen.

Ein Auswertebereich wird im Prüfbild und/oder im Referenzbild definiert. Der Auswertebereich umfasst die Kopffläche wenigstens teilweise. Der Auswertebereich ist in Teilbereiche, insbesondere Pixel, eingeteilt. Den Teilbereichen wird ein Temperaturwert zugeordnet. Ausgehend von den Temperaturwerten der korrespondierenden Teilbereiche des Referenz- und Prüfbildes wird ein Temperaturänderungswert anhand einer Vorschrift gebildet.

Ausgehend von dem Temperaturänderungswert wird ein "Gut"-Wert gebildet, wenn die Temperaturänderung in einem vordefinierten Temperaturintervall liegt.

Wenn in der Bauteilverbindung eine ausreichende Wärmeleitung über die Decklage gegeben ist, liegt bei einer "OK"-Verbindung aufgrund der höheren Wärmeleitfähigkeit der Decklage schon zum zweiten Erfassungszeitpunkt eine ausreichend große Menge an Teilbereichen in dem vordefinierten Temperaturintervall mit zumindest einer vorbestimmten unteren Intervallgrenze vor. Auch hat noch kein Wärmeausgleich innerhalb des Verbindungselements, insbesondere im Bereich des Kopfes, stattgefunden. Dies lässt darauf schließen, dass der gesamte Übertragungsweg keine signifikanten Fehlstellen aufweist. Es erlaubt damit die Abgrenzung von einer "OK"-Verbindung zu einer fehlerhaften Verbindung.

Am Beispiel einer Schweißverbindung ergeben sich Qualitätsmängel in Form von sogenannten Rissen, im Übergang von Basislage zu Schaft, wobei diese Risse umlaufend flächige Lufteinschlüsse umfassen. Diese haben eine reduzierte Wärmeleitung in die Decklage zur Folge. Insbesondere ergibt sich auch eine veränderte Wärmeentwicklung in der Basislage aufgrund der Induktion in Verbindung mit den sich in die Basislage erstreckenden Rissen, die die Wärmeleitung durch den Bauteilverbund beeinflusst.

Auch eine mangelnde Anbindung des Kopfes an die Decklage führt im Ergebnis zu einer reduzierten Wärmeleitung über die Decklage, was sich entsprechend in dem Temperaturänderungsbild zum zweiten Erfassungszeitpunkt widerspiegelt.

Darauf basierend wird eine Klassifizierung der Verbindungsstelle durchgeführt, indem die Summe der Teilbereiche mit einem "Gut"-Wert mit einem Referenzintervall verglichen wird. Die Verbindungsstelle wird als "OK"-Verbindung klassifiziert, wenn die Summe im Referenzintervall liegt, andernfalls wird die Verbindungsstelle als "Nicht OK"-Verbindung klassifiziert. Das Referenzintervall ist nach unten begrenzt und auf die Kopfgröße abgestimmt.

Dies trägt dem Umstand Rechnung, dass insbesondere die Erwärmung des Randbereich des Kopfes die Wärmeleitung über die Decklage abbildet.

Durch das erfindungsgemäße Verfahren kann auf einfache Weise mit nur einer Auswertung die Qualität einer Bauteilverbindung unter Berücksichtigung sowohl der Anbindungsstelle des Verbindungselements an die Basislage als auch des Übergangs des Kopfes des Verbindungselements zur Decklage bewertet werden.

Vorzugsweise ist die Vorschrift als eine Subtraktion der Temperaturwerte der korrespondierenden Teilbereiche des Prüfbildes und des Referenzbildes ausgebildet, insbesondere wird der Temperaturwert des Teilbereichs des Referenzbildes vom Temperaturwert des Teilbereichs des Prüfbildes subtrahiert. Durch eine Subtraktion wird eine einfache Bildung eines Temperaturänderungswertes für jedes Pixel gewährleistet.

Durch die Verwendung des Temperaturänderungswerts wird dem Umstand Rechnung getragen, dass der Kopf aufgrund seiner Geometrie ein inhomogenes Abstrahlverhalten aufweist, dessen Einfluss durch die Erfassung der Temperaturänderung reduziert werden kann.

Bevorzugt ist der zweite Erfassungszeitpunkt so gewählt, dass zum zweiten Erfassungszeitpunkt noch Temperaturunterschiede innerhalb der Kopffläche bei einer "Nicht OK"-Verbindung vorliegen.

Dieser Zeitpunkt wird insbesondere durch Auswertung des Temperaturverlaufs einer als "OK"-Verbindung bekannten Verbindung anhand einer Kalibriermessung bestimmt. Dadurch wird sichergestellt, dass eine zuverlässige und reproduzierbare Klassifizierung der Verbindungsstelle möglich ist.

Gemäß einer weiteren vorteilhaften Ausführungsform der Erfindung wird zur Bestimmung des zweiten Erfassungszeitpunkts der Temperaturänderungsverlauf der Kalibriermessung einer "OK"-Verbindung ab dem Anregungszeitpunkt eines Teilbereichs oder der Mittelwert von zumindest zwei Teilbereichen des Auswertebereichs wenigstens so lange generiert, bis die Steigung des Temperaturänderungsverlaufs negativ wird. Somit kann ein Zeitpunkt als zweiter Erfassungszeitpunkt gewählt werden, bei dem Temperaturausgleichs- und Sättigungseffekte, die sich nach dem Temperaturänderungsmaximum einstellen, reduziert sind. Für die Ermittlung des zweiten Erfassungszeitpunkts werden so nur Zeitpunkte bis zum Temperaturänderungsmaximum berücksichtigt, insbesondere der Zeitpunkt bei Erreichen des Temperaturmaximums oder kurz vor dem Erreichen des Temperaturmaximums gewählt.

Hierdurch wird beim Prüfverfahren ein signifikanter Unterschied der Temperaturänderungswerte von "Gut"-Pixel zu den restlichen Pixeln gewährleistet, wodurch eine aussagekräftige Klassifizierung ermöglicht wird.

Gemäß einer weiteren bevorzugten Ausgestaltung der Erfindung kann die Vorschrift zur Auswertung der Temperaturänderungen die Erzeugung eines Temperaturänderungsbildes umfassen, das die Temperaturänderung am jeweiligen Pixel abbildet. Die Erzeugung eines Temperaturänderungsbildes hat den Vorteil, dass eine graphische Weiterverarbeitung, insbesondere Bildverarbeitung unter Verwendung von Filteralgorithmen, ermöglicht wird.

Vorzugsweise entspricht der zweite Erfassungszeitpunkt dem Zeitpunkt der maximalen Temperaturänderung des Temperaturänderungsverlaufs, wobei die maximale Temperaturänderung insbesondere wenigstens 2 Kelvin (K) beträgt, bevorzugt mehr als 5 K. Durch die Festlegung des zweiten Erfassungszeitpunkts am Zeitpunkt der maximalen Temperaturänderung können die einzelnen Pixel aussagekräftig bewertet werden.

Bevorzugt wird das Temperaturintervall auf Basis des Temperaturänderungsverlaufs der Kalibriermessung ermittelt. Dies ermöglicht ein auf die Eigenschaften des Bauteilverbunds angepasstes Prüfen der Verbindungsstelle.

Beispielsweise kann der "Gut"-Wert bei einer Temperaturänderung von größer gleich 5 bis 10 Kelvin eines Pixels einem entsprechenden Pixel zugeordnet werden. Eine eindeutige Abgrenzung zu Umgebungsbereichen und Fehlstellen wird dadurch ermöglicht.

Vorzugsweise wird der Temperaturverlauf durch die Kalibriermessung unter Umgebungsbedingungen, wie sie bei der Aufnahme des Prüfbilds vorliegen, generiert. Hierdurch wird der Einfluss der Umgebungsbedingungen während des Prüfverfahrens minimiert.

Bevorzugt ist die Wirkfläche des Induktors in der Basislage zentrisch zu der Kopffläche angeordnet. Dadurch wird eine gleichmäßige und gezielte Anregung unterhalb der Grundfläche des Verbindungselements ermöglicht.

Vorzugsweise sind die Wirkfläche und die Wärmebildkamera fluchtend angeordnet. Hierdurch wird sichergestellt, dass die Verbindungsstelle sich vollständig im Aufnahmebereich der Wärmebildkamera befindet.

Um eine einfache und automatisierbare Positionierung der Wirkfläche zu ermöglichen, erfolgt die Positionierung des Induktors anhand einer Konturerkennung der Kopffläche durch die Wärmebildkamera.

Der Bauteilverbund und insbesondere das Verbindungselement werden durch die Umgebungstemperatur, durch die unterschiedlichen Materialien und geometrischen Ausbildungen unterschiedlich erwärmt. Diese unterschiedliche Temperaturverteilung des Bauteilverbunds ermöglicht eine passive Detektion des Kopfes durch die Wärmebildkamera, da der Kopf des Verbindungselements eine von dem umgebenden Bauteilverbund signifikant unterschiedliche Temperatur aufweist.

Gemäß einer weiteren Ausführungsform der Erfindung weist das Referenzintervall eine obere Intervallgrenze auf. Eine zweite Intervallgrenze führt zu einer gezielteren Bewertung der einzelnen Pixel des Prüfbildes. Hierdurch können verschiedene Fehlertypen unterschieden werden, respektive wird unterschieden, ob die Summe der "Gut"-Werte unterhalb der einen Intervallgrenze oder oberhalb der anderen Intervallgrenze liegt. Dringt ein Verbindungselement mit seinem Kopf zu weit in die Decklage ein, kann dies dazu führen, dass sich um den Kopf herum eine Wulst aus der Decklage bildet. Durch diese Wulst wird das Gefüge der Decklage so weit verändert, dass eine erhöhte Abstrahlung festgestellt werden kann. Dadurch kann dann ebenfalls auf einen Qualitätsmangel geschlossen werden.

Vorzugsweise ist die wenigstens eine Intervallgrenze durch eine Toleranz von 10% der Summe der "Gut"-Werte der Referenzmessung ausgebildet. Dadurch werden kleinere, irrelevante Abweichungen zwischen Prüfbild und Referenzmessung herausgemittelt.

Bevorzugt entspricht der Auswertebereich ± 20% der Kopffläche. Hierdurch wird besonders auch der Rand- und Übergangsbereich des Verbindungselements bei der Prüfung berücksichtigt.

Gemäß einer weiteren vorteilhaften Ausführungsform der Erfindung wird der Auswertebereich anhand einer Berechnung basierend auf der Referenzmessung ermittelt. Dies ermöglicht eine schnelle und automatisierte Festlegung des Auswertebereichs.

Vorzugsweise ist der Auswertebereich zentrisch zur Kopffläche ausgebildet. Durch die Festlegung eines zentrischen Auswertebereichs zur Kopffläche wird eine zumindest teilweise Auswertung der Kopffläche und des zylindrischen Bereichs unterhalb der Kopffläche gewährleistet. Hierdurch können Inhomogenitäten innerhalb des Bereichs detektiert werden.

Bevorzugt wird der Abstand des Induktors zur unteren Lage des Bauteilverbunds so eingestellt, dass ein signifikanter Temperatureintrag im Bauteilverbund generiert wird. Bei einem zu großen Abstand des Induktors zum Bauteilverbund lässt sich keine eindeutige Klassifizierung aufgrund des zu geringen Unterschieds der Temperaturveränderungswerte feststellen.

Um externe Fehler eines Temperaturänderungsbilds herauszufiltern, kann ein Filter, beispielsweise ein Gauß-Filter, auf das Temperaturänderungsbild angewendet werden. So kann der Informationsgehalt benachbarter Pixel in die Auswertung mit einbezogen werden.

Vorzugsweise ist der Bauteilverbund als eine Mischbau-Fügeverbindung ausgebildet, wobei die Basislage und das Fügeelement aus Stahl eine Reibschweißverbindung eingehen und die Decklage aus Aluminium ausgebildet ist.

Gemäß einer weiteren vorteilhaften Ausführungsform der Erfindung weist die Basislage eine Dicke von 0,8 - 2 mm und die Decklage eine Dicke von 1,0 - 4 mm auf.

Vorzugsweise ist das Verbindungselement als ein Reibelement mit Antriebsstrukturen am Kopf ausgebildet.

Ferner ist eine Vorrichtung angegeben, die eine Wärmebildkamera, ein Positionierungsmittel, einen Induktor und eine Auswertesteuereinheit umfasst. Der Induktor arbeitet bevorzugt mit einer Anregungsfrequenz von 15kHz-50kHz. Dadurch wird ein zu tiefes Eindringen der Anregung in den Bauteilverbund, insbesondere in das Verbindungselement in den "Tiefenbereich" der Decklage hinein, vermieden. So wird sichergestellt, dass der Einfluss des Wärmeflusses über die Decklage ausreichend berücksichtigt werden kann.

Bevorzugt führt die Auswertesteuereinheit das erfindungsgemäße Verfahren durch.

Vorzugsweise steuert die Auswertesteuereinheit das Positionierungsmittel.

Gemäß einer weiteren vorteilhaften Ausführungsform umfasst das Positionierungsmittel eine Verbindung, insbesondere einen C-Bügel, der Wärmebildkamera und des Induktors, die zueinander ortsfest ausgebildet sind, und die Verbindung relativ zu der Verbindungsstelle positioniert. Hierdurch wird eine exakte und automatisierte Positionierung anhand der Verbindung zueinander realisiert.

Bevorzugt umfasst das Positionierungsmittel zwei unabhängig voneinander bewegbare Teilmittel, wobei ein Teilmittel mit der Wärmebildkamera verbunden ist und das andere Teilmittel mit dem Induktor verbunden ist und die Wärmebildkamera und den Induktor relativ zu der Verbindungsstelle positioniert. Die Teilmittel sind vorzugsweise als unabhängig voneinander bewegliche Roboterarme ausgebildet. Durch diesen Aufbau können, je nach Gestaltung der Roboterarme, auch schwer zugängliche Verbindungsstellen durch die Prüfvorrichtung erreicht werden.

Vorzugsweise wird die Wärmebildkamera zur genauen Positionsermittlung der Verbindungsstelle verwendet, wobei die ermittelte Position zur Steuerung der Positionierungsmittel verwendet wird.

Gemäß einer weiteren Ausführungsform umfasst die Auswertesteuereinheit einen Datenspeicher, in dem insbesondere Referenzmessungen und Temperaturverläufe abgespeichert sind.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen. In der Zeichnung bedeutet:
- Fig. 1a: eine Schnittansicht des Bauteilverbunds mit einem Verbindungselement einer "OK"-Verbindung;
- Fig. 1b: eine Schnittansicht des Bauteilverbunds mit einem anderen Verbindungselement einer "OK"-Verbindung;
- Fig. 2a: eine Schnittansicht des Bauteilverbunds mit einem Verbindungselement nach Fig. 1a einer "Nicht OK"-Verbindung, wobei die Verbindungsstelle Risse aufweist;
- Fig. 2b: eine Schnittansicht des Bauteilverbunds mit einem Verbindungselement nach Fig. 1b einer "Nicht OK"-Verbindung, wobei die Verbindungsstelle Falten aufweist;
- Fig. 2c: eine Schnittansicht des Bauteilverbunds mit einem Verbindungselement nach Fig. 1b einer "Nicht OK"-Verbindung, wobei das Verbindungselement eine zu geringe Eindringtiefe aufweist;
- Fig. 3: eine schematische Darstellung des schrittweisen Ablaufs des erfindungsgemäßen Verfahrens;
- Fig. 4a: ein Temperaturänderungsbild nach Fig. 2a mit visualisierten "Gut"-Werten;
- Fig. 4b: ein Temperaturänderungsbild nach Fig. 2c mit visualisierten "Gut"-Werten;
- Fig. 5: eine schematische Schnittansicht einer Vorrichtung zur Durchführung des erfindungsgemäßen Verfahrens;
- Fig. 6a: eine perspektivische Ansicht einer zweiten Ausführungsform des Verbindungselements 12b;
- Fig. 6b: ein Prüfbild einer Referenzmessung der zweiten Ausführungsform des Verbindungselements 12b nach Fig 6a mit einem Auswertebereich; und
- Fig. 7: ein Temperaturänderungsverlauf des Auswertebereichs des Prüfbildes mit einem zweiten Erfassungszeitpunkt.

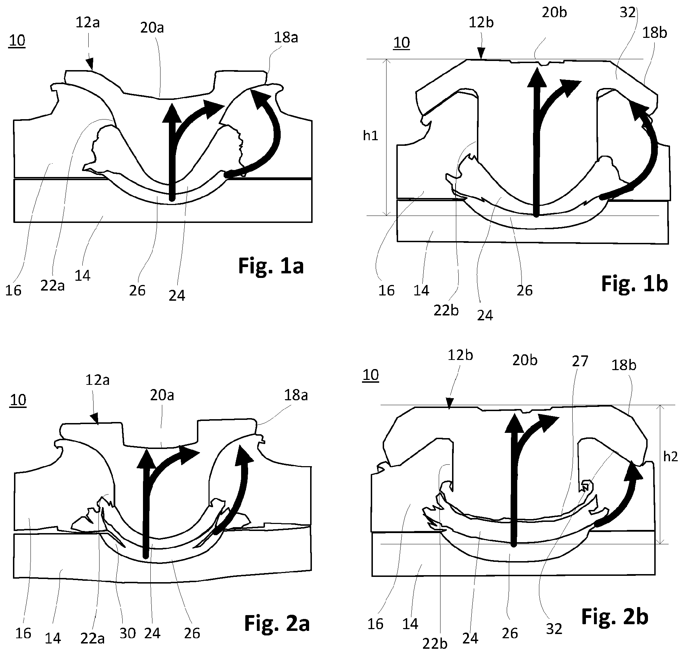

Die Fig. 1a bis 2c zeigen jeweils eine schematische Schnittansicht einer Verbindungsstelle 10, umfassend ein Verbindungselement 12a, 12b zur Verbindung einer Basislage 14 mit einer Decklage 16, einer Wärmeeinflusszone 24 des Verbindungselements 12a, 12b und einer Wärmeeinflusszone 26 der Basislage 14. Die Basislage 14 und das Verbindungselement 12a, 12b sind gleichartig ausgebildet und weisen insbesondere eine ähnliche Leitfähigkeit auf. Die Decklage 16 ist auf der Basislage 14 angeordnet. Das Verbindungselement 12a, 12b umfasst einen Kopf 18a, 18b mit einer Kopffläche 20a, 20b und einen Schaft 22a, 22b. Im unteren Bereich des Verbindungselements 12a, 12b liegt eine Wärmeeinflusszone 24 des Verbindungselements 12a, 12b. Unterhalb der Wärmeeinflusszone 24 des Verbindungselements 12a, 12b befindet sich eine Wärmeeinflusszone 26 der Basislage 14. Das Verbindungselement 12a, 12b ist durch die Decklage 16 in den Bauteilverbund aus Decklage 16 und Basislage 14 eingebracht und bildet dann eine Reibschweißverbindung mit der Basislage 14.

Die Decklage 16 ist aus Aluminium, die Basislage 14 und das Verbindungselement 12a, 12b sind aus Stahl gebildet. Dadurch ist der Bauteilverbund in Mischbauweise ausgebildet.

In einer Ausführungsform weist die Decklage eine Dicke von 1,0 - 4 mm und die Basislage eine Dicke von 0,8 - 2 mm auf. Das Verbindungselement ist vorzugsweise ein Reibelement.

Die Pfeile in den Fig. 1a - 2c zeigen jeweils Pfade der Wärmeleitung nach dem Anregungszeitpunkt in der Verbindungsstelle 10 an.

Die Fig. 1a zeigt eine "OK"-Verbindung mit einer ersten Ausführungsform eines Verbindungselements 12a, wobei die erste Ausführungsform des Verbindungselements 12a eine Antriebsstruktur 28 für einen Innenantrieb im Kopf 18a der ersten Ausführungsform des Verbindungselements 12a aufweist und die erste Ausführungsform des Verbindungselements 12a in der Art einer Senkkopfschraube ausgebildet ist. Der Schaft 22a der ersten Ausführungsform des Verbindungselements 12a ist zylindrisch ausgebildet. Die Wärmeeinflusszone 24 der ersten Ausführungsform des Verbindungselements 12a und die Wärmeeinflusszone 26 der Basislage 14 sind homogen ausgebildet. Der Kopf 18a der ersten Ausführungsform des Verbindungselements 12a liegt bereichsweise an der Decklage 16 auf.

Die Fig. 1b zeigt eine "OK"-Verbindung mit einer zweiten Ausführungsform eines Verbindungselements 12b, wobei sich dieses Verbindungselement 12b von der ersten Ausführungsform des Verbindungselements 12a durch die geometrische Ausbildung des Kopfes 18b der zweiten Ausführungsform des Verbindungselements 12b und des Schaftes 22b der zweiten Ausführungsform des Verbindungselements 12b unterscheidet. Die zweite Ausführungsform des Verbindungselements 12b weist eine andere Struktur im Kopf 18b der zweiten Ausführungsform des Verbindungselements 12b auf, die für einen Außenantrieb vorgesehen ist. Die Kopffläche 20b der zweiten Ausführungsform des Verbindungselements 12b umfasst einen größeren Durchmesser als die Kopffläche 20a der ersten Ausführungsform des Verbindungselements 12a. Des Weiteren weist der Kopf 18b der zweiten Ausführungsform des Verbindungselements 12b einen umlaufenden Kopfvorsprung 32 auf, der in Richtung des Bauteilverbunds abgewinkelt ist. Der Schaft 22b der zweiten Ausführungsform des Verbindungselements 12b weist eine zylindrische Form auf.

Die Wärmeleitung in der Verbindungsstelle 10, anschließend an den Anregungszeitpunkt, erfolgt im Wesentlichen über zwei Pfade. Zum einen über den Schaft 22a der ersten Ausführungsform des Verbindungselements 12a, wobei die Wärme zuvor durch die Basislage 14 und die Wärmeeinflusszonen 24, 26 geleitet wurde. Zum anderen wird die Wärme von der Wärmeeinflusszone 26 der Basislage 14 über die Decklage 16 in den Kopf 18a der ersten Ausführungsform des Verbindungselements 12a geleitet. In Fig. 1a und 1b erfolgt die Wärmeleitung über die Decklage 18 schneller als über den Schaft 22a, 22b des Verbindungselements 12a, 12b, da die Decklage 18 insbesondere aus Aluminium eine höhere Wärmeleitfähigkeit als das Verbindungselement 12a, 12b aufweist. Der zweite Erfassungszeitpunkt ist so gewählt, dass die Wärmeleitung der induzierten Wärme über beide Pfade, insbesondere über die Decklage, zu einem signifikanten Maß an der Kopfoberfläche angelangt ist.

Die Fig. 2a zeigt eine "Nicht OK"-Verbindung mit einer ersten Ausführungsform des Verbindungselements 12a. Die Verbindungsstelle 10 weist im Bereich der Wärmeeinflusszone 24 des Verbindungselements 12a und der Wärmeeinflusszone 26 der Basislage 14 in den seitlichen Bereichen Risse 30 auf, die als umlaufend flächige Abrisse, also kegelförmig, ausgebildet sind.

Durch die Risse 30 im seitlichen Bereich der Wärmeeinflusszone 26 der Basislage 14 sind bereichsweise flächige Lufteinschlüsse ausgebildet. Diese Lufteinschlüsse führen bei der Anregung zu einer inhomogenen, ringförmigen Induktion in der Basislage außerhalb der Risse. Die Wärme wird hauptsächlich seitlich, von der Verbindungsstelle 10 weg, in der Basislage 14 geleitet. Durch die Risse 30 wird zusätzlich eine Wärmeleitung von der Wärmeeinflusszone 26 der Basislage 14 über die Decklage 16 in den Kopf 18a der ersten Ausführungsform des Verbindungselements 12a gehemmt. Da die Decklage 16 eine deutlich höhere spezifische Wärmekapazität aufweist als die Basislage 14, wird angenommen, dass die Wärmeenergie in der Basislage nicht mehr ausreicht, um die Decklage 16 bis zum zweiten Erfassungszeitpunkt signifikant zu erwärmen. Durch diesen Wärmestau ist eine effektive Wärmeleitung in die Decklage 16 unterbunden. Die Wärme wird primär über die Schweißverbindung der Basislage 14 mit dem Schaft 22a des ersten Verbindungselements 12a geleitet, was zu einer späteren Erwärmung des Kopfes 18a der ersten Ausführungsform des Verbindungselements 12a führt. Daher ist der Kopf 18a des Verbindungselements 12a zum zweiten Erfassungszeitpunkt einerseits weniger erwärmt als in einer "OK" Verbindung, andererseits ist dadurch die erwärmte Fläche in der Kopfmitte, die eine zur Bewertung als "Gut"-Pixel notwendige Temperaturänderung erfahren hat, geringer, da der Randbereich des Kopfes weder über das Material der Decklage noch über den Schaft ausreichend erwärmt wurde. Hierbei wird deutlich, dass die Bestimmung des zweiten Erfassungszeitpunkts wesentlich für die Aussagekraft der Prüfung ist.

Diese Art der Wärmeleitung gilt analog auch für die zweite Ausführungsform des Verbindungselements 12b und jede weitere Ausführungsform eines Verbindungselements.

Die Fig. 2b stellt eine "Nicht OK"-Verbindung mit der zweiten Ausführungsform des Verbindungselements 12b dar. Die "Nicht OK"-Verbindung zeichnet sich dadurch aus, dass die zweite Ausführungsform des Verbindungselements 12b tiefer in den Bauteilverbund eingebracht ist im Vergleich zur "OK"-Verbindung in Fig. 2a (h1 > h2), wobei h1 die Eindringtiefe der zweiten Ausführungsform des Verbindungselements 12b in den Bauteilverbund in Fig. 1b und h2 die Eindringtiefe der zweiten Ausführungsform des Verbindungselements 12b in den Bauteilverbund in Fig. 2b darstellt. Dadurch bildet der untere Teil des Schafts 22b der zweiten Ausführungsform des Verbindungselements 12b sogenannte Falten. Zwischen der zweiten Ausführungsform des Verbindungselements 12b und der Wärmeeinflusszone 24 der zweiten Ausführungsform des Verbindungselements 12b ist ein Luftspalt 27 ausgebildet. Entsprechend erfolgt die Wärmeleitung um den Luftspalt herum.

Die Wärmeleitung in der Verbindungsstelle 10 in Fig. 2b erfolgt primär über die Wärmeeinflusszonen 24, 26 über die Decklage 16 in den Kopf 18b der zweiten Ausführungsform des Verbindungselements 12b. Die Wärmeleitung über den Schaft 22b der zweiten Ausführungsform des Verbindungselements 12b ist aufgrund des Luftspalts 27, der sich durch das tiefere Eindringen des Verbindungselements 12b gebildet hat, gehemmt. Das tiefe Eindringen der zweiten Ausführungsform des Verbindungselements 12b bewirkt zusätzlich die Ausbildung von einer Wulst aus der Decklage 16 am radial äußeren Ende des Kopfes 18b der zweiten Ausführungsform des Verbindungselements 12b. Die ausgebildete Wulst führt zu einer Erweiterung der erwärmten Fläche zum zweiten Erfassungszeitpunkt. Die Form der Wärmeleitung bei einer entsprechenden "Nicht OK"-Verbindung gilt äquivalent für eine Verbindungsstelle 10 mit einer ersten Ausführungsform des Verbindungselements 12a oder einer weiteren Ausführungsform eines Verbindungselements.

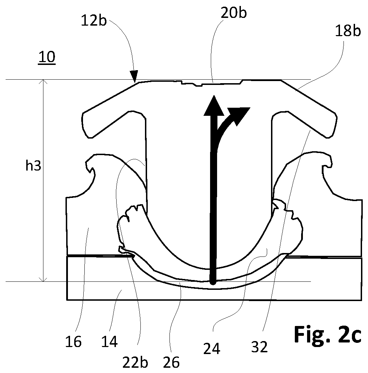

Die Fig. 2c weist eine "Nicht OK"-Verbindung mit einem zweiten Verbindungselement 12b auf, wobei das zweite Verbindungselement 12b nicht so tief in den Bauteilverbund eingebracht ist wie die "OK"-Verbindung in Fig. 2a (h1 < h3), wobei h3 die Eindringtiefe des zweiten Verbindungselements 12b in den Bauteilverbund in Fig. 2c darstellt. Hier ist der Kopfvorsprung 32 im Vergleich zu Fig. 1b und 2b nicht bündig mit der Decklage 16 verbunden.

Die Wärmeleitung in der Verbindungsstelle 10 in Fig. 2c erfolgt im Wesentlichen von der Wärmeeinflusszone 26 der Basislage 14 über die Wärmeeinflusszone 24 der ersten Ausführungsform des Verbindungselements 12a und anschließend in den Schaft 22a der ersten Ausführungsform des Verbindungselements 12a. Vom Schaft 22a der ersten Ausführungsform des Verbindungselements 12a wird die Wärme in den Kopf 18a der ersten Ausführungsform des Verbindungselements 12a geleitet. Zum einen ist durch die geringe Eindringtiefe der ersten Ausführungsform des Verbindungselements 12a die Strecke (h3), über die die Wärme geleitet wird, länger als die Strecke (h1) einer "OK"-Verbindung der ersten Ausführungsform des Verbindungselements 12a, zum anderen befindet sich der Kopf nicht in einem wärmeübertragenden Eingriff mit der Decklage 16.

Dies führt dazu, dass der Kopf 22a der ersten Ausführungsform des Verbindungselements 12a, obwohl eine intakte Schweißverbindung über die gesamte Schaftfläche vorliegt, trotzdem aufgrund des schlechten Kontakts zwischen dem Kopf und der Decklage erst zu einem späteren, nach dem zweiten Erfassungszeitpunkt liegenden Zeitpunkt, vollständig und ausreichend erwärmt ist.

Auf diese Weise können sowohl oberflächliche als auch innenliegende Qualitätsmängel mit ein und derselben Messung ausgeschlossen werden.

Die "Nicht OK"-Verbindung nach Fig. 2a mit der ersten Ausführungsform des Verbindungselements 12a wird auch mit der zweiten Ausführungsform des Verbindungselements 12b als "Nicht OK"-Verbindung" durch das erfindungsgemäße Prüfverfahren klassifiziert. Die Fehlstellen der Verbindungsstellen 10 nach Fig. 2a bis 2c können durch das erfindungsgemäße Prüfverfahren auch bei weiteren Ausführungsformen von Verbindungselementen detektiert und nach "OK"- und "Nicht OK"-Verbindung klassifiziert werden.

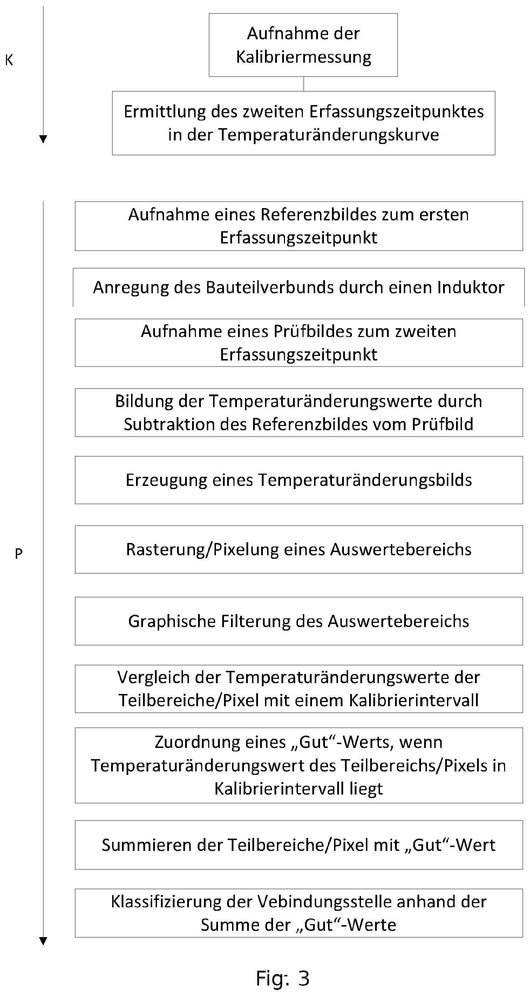

In Fig. 3 ist eine schematische Darstellung des schrittweisen Ablaufs des Verfahrens zur zerstörungsfreien Prüfung dargestellt. Dieses Verfahren zur Prüfung von Verbindungsstellen 10 beruht auf dem Prinzip der passiven Thermographie, wobei dennoch der Bauteilverbund über einen Induktor 36 auf der der Decklage 16 abgewandten Seite der Basislage 14 durch einen Anregungsimpuls zu einem Anregungszeitpunkt, der den Bereich des Schafts 22a, 22b des Verbindungselements 12a, 12b beinhaltet, thermisch angeregt wird.

Der zweite Erfassungszeitpunkt 44 wird durch eine Kalibriermessung K ermittelt. Die Kalibriermessung K wird anhand einer als "OK"-Verbindung bekannten Probe durchgeführt. Das Verbindungselement 12a, 12b, die Dicken der Basis- und Decklage 14, 16 und das Material der Basis- und Decklage 14, 16 sind bei der Kalibriermessung K identisch zum Bauteilverbund, wie er im korrespondierenden Prüfverfahren P überprüft wird. Ein Kalibrierauswertebereich 46, der die Kopffläche 20a, 20b zumindest teilweise umfasst, wird für die Kalibriermessung K festgelegt. Die Kalibriermessung K kann dabei zu einem beliebigen Zeitpunkt vor dem Prüfverfahren erfolgen. Des Weiteren kann die Kalibriermessung K auch mehrfach, beispielsweise nach einer festgelegten Zeitspanne oder einer festgelegten Anzahl an durchgeführten Prüfzyklen, erfolgen.

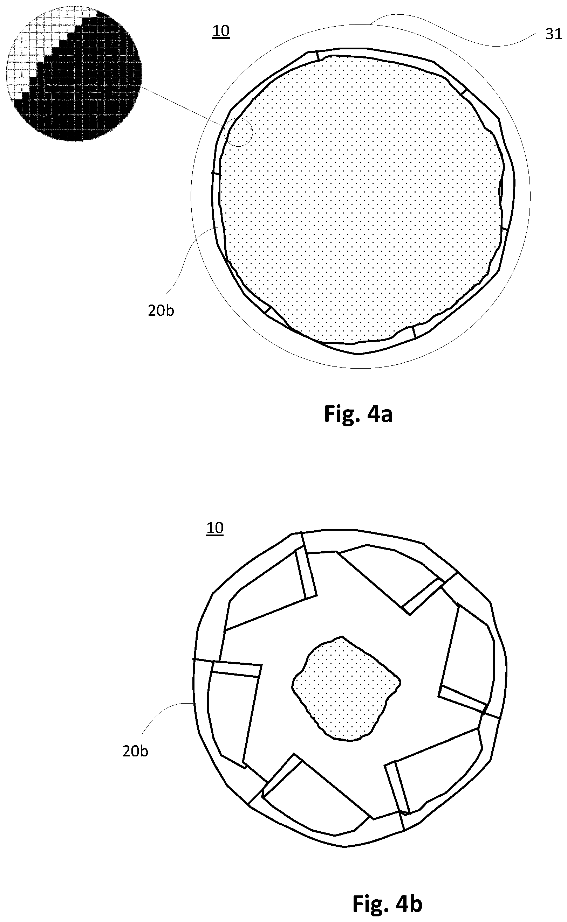

Die Temperaturänderung innerhalb des Kalibrierauswertebereichs 46 wird über einen Zeitverlauf aufgezeichnet. Der generierte Temperaturänderungsverlauf, siehe Fig. 4b, enthält einen Zeitpunkt der maximalen Temperaturänderung. Dieser Zeitpunkt wird als zweiter Erfassungszeitpunkt 44 für das zerstörungsfreie Prüfverfahren verwendet.

Zu einem ersten Erfassungszeitpunkt, der bevorzugt vor dem Anregungszeitpunkt liegt, wird ein Referenzbild der Verbindungsstelle 10 mit Pixeln, denen Temperaturwerte zugeordnet sind, von der Wärmebildkamera 34 aufgenommen.

Der erste Erfassungszeitpunkt liegt insbesondere unmittelbar vor dem Anregungszeitpunkt. Die Wärmebildkamera 34 ist auf der der Basislage 14 abgewandten Seite der Decklage 16 über dem Kopf des Verbindungselements angeordnet.

Durch die Anregung wird eine Wärmeleitung durch die Basislage 14 und dann auf unterschiedlichen Übertragungswegen/Wärmeleitungspfaden zum Kopf 18a, 18b des Verbindungselements 12a, 12b geleitet. Zum einen wird die Wärme über die beiden Wärmeeinflusszonen 24, 26 in den Schaft 22a, 22b des Verbindungselements 12a, 12b geleitet. Anschließend fließt die Wärme zum Kopf 18a, 18b des Verbindungselements 12a, 12b. Zum anderen wird die Wärme von der Wärmeeinflusszone 26 der Basislage 14 über die Decklage 16 in den Kopf 18a, 18b des Verbindungselements 12a, 12b geleitet. Aufgrund der unterschiedlichen Materialien von Decklage und Verbindungselement 12a, 12b haben beide Wärmeleitungspfade unterschiedliche Laufzeiten. Die Laufzeiten der Wärmeleitung unterscheiden sich insbesondere auch durch die Materialanordnung und durch Fehlstellen, vgl. Fig 2a bis 2c. Durch den höheren Wärmeleitkoeffizienten von Aluminium (~ 160 W/mK) im Vergleich zu Stahl (~ 40 W/mK) wird die Wärme im Aluminium schneller geleitet. Des Weiteren sind Laufzeitunterschiede durch unterschiedliche Einbringungstiefen der Verbindungselemente 12a, 12b im Bauteilverbund gegeben.

An einem vorbestimmten zweiten Erfassungszeitpunkt 44 wird ein Prüfbild analog zu dem Referenzbild der Verbindungsstelle 10 durch die Wärmebildkamera 34 aufgenommen.

Nach der Aufnahme des Prüfbildes werden die Temperaturwerte des Referenzbildes von den korrespondierenden Temperaturwerten des Prüfbildes subtrahiert. Dies kann auch schon im Rahmen der Aufnahme des Prüfbilds automatisch von der Erfassungsvorrichtung vorgenommen werden. Den Pixeln des Prüfbildes werden nun korrespondierende Temperaturänderungswerte zugeordnet und ein Temperaturänderungsbild, das in einem Auswertebereich 31 ausgewertet wird, wird erstellt. Durch die unterschiedlichen Laufzeiten der Wärmeleitungen und Wärmeleistungsverlusten innerhalb des Bauteilverbunds bei "OK"-Verbindungen, vgl. Fig. 1a und 1b, und "Nicht OK"-Verbindungen, vgl. Fig. 2a bis 2c, weisen die Prüfbilder entsprechend signifikant unterschiedliche Temperaturänderungsverteilungen im jeweiligen Prüfbild auf.

Um externe Fehler, beispielsweise auf dem Kopf liegende Späne, zu reduzieren, wird ein Filter auf den Auswertebereich 31 angewandt. Der Auswertebereich 31 umfasst dabei zumindest teilweise die Kopffläche 20a, 20b des Verbindungselements 12a, 12b und ist zentrisch zur Kopffläche 20a, 20b des Verbindungselements 12a, 12b ausgebildet. Die gefilterten Pixel innerhalb des Auswertebereichs 31 werden mittels eines Temperaturintervalls bewertet.

Das Temperaturintervall und das Referenzintervall basieren auf der Auswertung einer Referenzmessung einer als "OK-Verbindung" bekannten Prüfanordnung.

Pixel mit einem Temperaturänderungswert, der innerhalb des Temperaturintervalls liegt, werden mit einem "Gut"-Wert versehen. Im vorliegenden Fall werden Pixel mit einem Temperaturänderungswert von größer gleich 5,4 °C und kleiner gleich 10,0 °C mit einem "Gut"-Wert versehen. In diesem Bereich lässt sich eine signifikante Aussage über das Erwärmungsverhalten treffen. Daraufhin wird die Summe der "Gut"-Werte in einem Auswertebereich 31 mit einem Referenzintervall verglichen. Liegt die Summe der "Gut"-Werte innerhalb des Referenzintervalls, liegt eine "OK"-Verbindung vor. Liegt die Summe der "Gut"-Werte außerhalb des Referenzintervalls wird die Verbindungsstelle 10 als "Nicht OK"-Verbindung klassifiziert. Das Referenzintervall, bei dem eine Verbindung als "OK"-Verbindung gewertet wird, ist so gewählt, dass die Pixelanzahl zwischen 90% und110% der Pixelanzahl der Kopffläche entspricht.

Der Auswertebereich 31 ist im vorliegenden Fall als + 20% der Kopffläche ausgebildet.

In Fig. 4a ist ein Temperaturänderungsbild einer "OK"-Verbindung nach Fig. 2a mit visualisierten "Gut"-Werten dargestellt. Die "Gut"-Werte befinden sich innerhalb der Kopffläche 20b des zweiten Verbindungselements 12b. Der gerasterte Auswertebereich 31 mit visualisierten "Gut"-Werten ist ebenfalls dargestellt und in einer Detailvergrößerung gezeigt. Der Auswertebereich 31 umfasst die Kopffläche 20b des zweiten Verbindungselements 12b.

In Fig. 4b ist ein Temperaturänderungsbild einer "Nicht OK"-Verbindung nach Fig. 2c mit visualisierten "Gut"-Werten dargestellt. Die "Gut"-Werte befinden sich innerhalb der Kopffläche 20b des zweiten Verbindungselements 12b. Im Vergleich zu Fig. 4a ist die Summe bzw. Fläche der "Gut"-Werte kleiner und liegt nicht mehr innerhalb des Referenzintervalls. Dadurch wird die Verbindungsstelle als "Nicht OK"-Verbindung klassifiziert. Der Auswertebereich 31 ist analog zur Detailvergrößerung in Fig. 4a gerastert und die "Gut"-Werte entsprechend visualisiert.

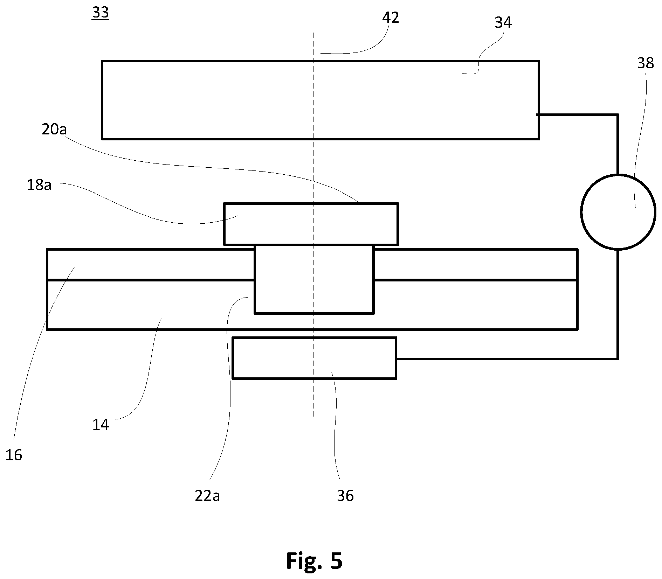

Fig. 5 zeigt eine schematische Schnittansicht einer Vorrichtung 33 zur Durchführung des erfindungsgemäßen Verfahrens sowie einen Bauteilverbund, der eine Verbindungsstelle 10, beispielhaft mit einem Verbindungselement 12b, umfasst. Die Vorrichtung 33 umfasst einen Induktor 36, eine Wärmebildkamera 34, eine Auswertesteuereinheit 38 und ein nicht dargestelltes Positionierungsmittel.

Die Auswertesteuereinheit weist einen Datenspeicher auf, in dem die Ergebnisse der Referenzmessungen und Kalibriermessungen für die jeweilige Bauteilanordnung abgespeichert sind. Vorzugsweise sind diese Messungen für eine Vielzahl von verschiedenen Konfigurationen der Verbindungsstelle 10 durchgeführt und in dem Datenspeicher abgespeichert. Beispielsweise unterscheiden sich die Konfigurationen durch das Verbindungsmittel 12a, 12b und/oder die Dicke der Basislage 14 und/oder der Decklage 16.

Die Wärmebildkamera 34 und der Induktor 36 sind mit der Auswertesteuereinheit 38 jeweils elektrisch verbunden. Auch das nicht dargestellte Positionierungsmittel, das beispielsweise einen Roboterarm aufweist, ist mit der Auswertesteuereinheit 38 elektrisch verbunden.

Der Induktor 36 ist auf der der Decklage 16 abgewandten Seite der Basislage 14 angeordnet. Der Abstand des Induktors zur Basislage 14, der Durchmesser und die Leistung des Induktors 36 sind dabei so eingestellt, dass ein signifikanter Temperatureintrag innerhalb des Schaftdurchmessers, der Wirkfläche, generiert wird.

Die Wärmebildkamera 34 ist auf der der Basislage 14 abgewandten Seite der Decklage 16 angeordnet. Die Position und der Abstand der Wärmebildkamera 34 relativ zum Bauteilverbund wird dabei so gewählt, dass die Verbindungsstelle 10, insbesondere die Kopffläche 20a, 20b des Verbindungselements 12a, 12b, sich im Aufnahmebereich der Wärmebildkamera 34 befindet. Die Wärmebildkamera 34 kann dabei auch zur Positionsermittlung der Verbindungsstelle 10, insbesondere der Kopffläche 20a, 20b des Verbindungselements 12a, 12b, verwendet werden.

Die Wirkfläche des Induktors 36 ist fluchtend zur Wärmebildkamera 34 entlang der Achse 42 angeordnet. Zur Positionierung des Induktors 36 und der Wärmebildkamera 34 zueinander und relativ zur Verbindungsstelle 10 wird das Positionierungsmittel verwendet. Dabei sind die Wärmebildkamera 34 und der Induktor 36 ortsfest über das Positionierungsmittel verbunden.

In einer weiteren Ausführungsform können die Position des Induktors 36 und die Position der Wärmebildkamera 34 unabhängig voneinander jeweils durch ein Teilmittel des Positionierungsmittel gesteuert werden.

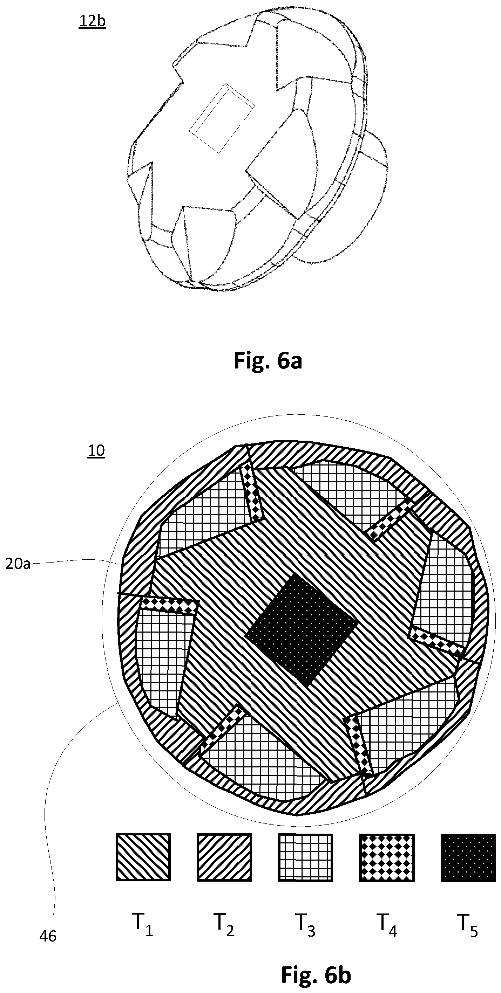

Die Fig. 6a zeigt die zweite Ausführungsform des Verbindungselements 12b. Insbesondere sind die Vertiefungen im Bereich des Kopfes dargestellt.

In Fig. 6b ist ein schematisches Bild der Kopffläche 20b des zweiten Verbindungselements 12b dargestellt, das während der Prüfmessung aufgenommen wurde. Ein Kalibrierauswertebereich 46 ist dabei in dem Bild angezeigt. Der Kalibrierauswertebereich 46 umfasst die Kopffläche 20b der zweiten Ausführungsform des Verbindungselements 12b. Die Fig. 6b zeigt dabei die unterschiedlichen Temperaturen auf der Kopffläche 20b der zweiten Ausführungsform des Verbindungselements 12b zum zweiten Erfassungszeitpunkt. Es gilt hierbei T1<T2<T3<T4<T5.

T5 und T4 stellen die Temperaturspitzen dar, da es sich hierbei um Vertiefungen in der Bauteiloberfläche, siehe Fig. 6a, handelt. Die Temperaturunterschiede ergeben sich durch die grundsätzliche Kopfgeometrie und anderen geometrischen Strukturen, wie Vertiefungen.

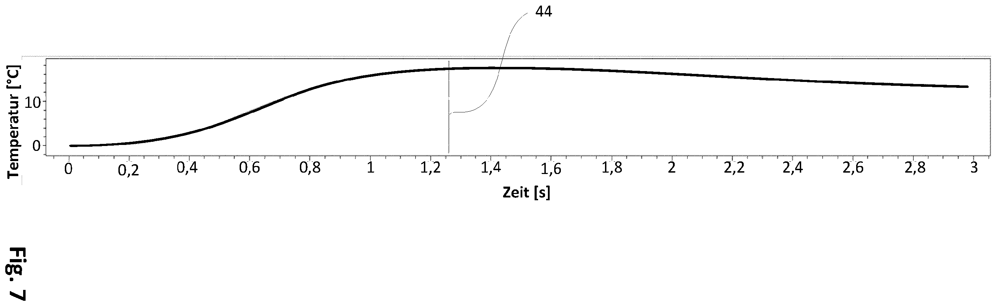

Fig. 7 zeigt ein Diagramm des Temperaturänderungsverlaufs der gemittelten Temperaturänderung innerhalb des Kalibrierauswertebereichs 46. Die x-Achse bildet die Zeit in s und die y-Achse die Temperaturänderung in °C ab. Der Temperaturänderungsverlauf wird hierbei für 3 s dargestellt, wobei die maximale Temperaturänderung bei ca. 18 °C liegt. Das Referenzbild wurde dabei beim Zeitpunkt 0s aufgenommen. Die in das Diagramm eingezeichnete Schnittline stellt den zweiten Erfassungszeitpunkt 44 für das Prüfverfahren dar. Dieser wird zwischen dem Wendepunkt und dem Temperaturänderungsmaximum des Temperaturänderungsverlaufs festgelegt.

Die Anregung umfasst eine Anregungsdauer mit einer Induktionsfrequenz von 15-60 kHz. Die Anregungsdauer liegt dabei vorzugsweise zwischen 0,1 s und 0,95 s. Die Amplitude der Anregung ist dabei abhängig von Materialdicke und gewünschter Temperaturänderung.

Durch das Verfahren zur zerstörungsfreien Prüfung und die korrespondierende Vorrichtung 33 wird eine schnelle, einfache und flexible Prüfung von Verbindungsstellen 10 in einem Bauteilverbund mit Verbindungselement 12a, 12b gewährleistet, wobei sowohl innere als auch äußere Qualitätsmängel ausgeschlossen werden können.

## Patentansprüche

1. Verfahren zur zerstörungsfreien Prüfung einer Verbindungsstelle (10) in einem Bauteilverbund, umfassend eine Basislage (14) und zumindest eine Decklage (16), und ein Verbindungselement (12a, 12b) mit einem Kopf (18a, 18b) und einem Schaft (22a, 22b), wobei die Verbindungsstelle (10) zwischen dem Schaft (22a, 22b) des Verbindungselements (12a, 12b) und der Basislage (14) ausgebildet ist, wobei die Decklage (16) eine Wärmeleitfähigkeit aufweist, die größer ist als die der Basislage (14) und des Verbindungselements (12a, 12b), wobei die Prüfung mittels einer Wärmebildkamera (34) und einem auf der Wärmebildkamera (34) gegenüberliegenden Seite des Bauteilverbunds angeordneten Induktor (36) erfolgt, wobei der Induktor (36) über eine Wirkfläche die Basislage (14) zu einem Anregungszeitpunkt mittels eines Impulses induktiv anregt, ferner:
• zu einem ersten Erfassungszeitpunkt ein Referenzbild der Verbindungsstelle (10) mit der Wärmebildkamera (34) aufgenommen wird, in dem der Kopf (18a, 18b) als Kopffläche (20a, 20b) abgebildet ist;
• zu einem zweiten Erfassungszeitpunkt (44) ein Prüfbild analog zum Referenzbild aufgenommen wird, wobei der zweite Erfassungszeitpunkt (44) nach dem ersten Erfassungszeitpunkt und eine vordefinierte Zeitspanne nach dem Anregungszeitpunkt liegt;
• ein Auswertebereich (42) im Prüfbild und im Referenzbild definiert wird, wobei der Auswertebereich (42) die Kopffläche (20a, 20b) wenigstens teilweise umfasst, und wobei der Auswertebereich (42) in Teilbereiche, insbesondere Pixel, eingeteilt ist, wobei den Teilbereichen ein Temperaturwert zugeordnet wird;
• ausgehend von den Temperaturwerten der korrespondierenden Teilbereiche des Referenz- und Prüfbildes wird ein Temperaturänderungswert anhand einer Vorschrift gebildet;
• ausgehend von dem Temperaturänderungswert wird ein "Gut"-Wert gebildet, wenn die Temperaturänderung in einem vordefinierten Temperaturintervall mit wenigstens einer Untergrenze liegt;
• eine Klassifizierung der Verbindungsstelle (10) durchgeführt wird, indem die Summe der Teilbereiche mit einem "Gut"-Wert mit einem Referenzintervall mit zumindest einer vorbestimmten unteren Intervallgrenze verglichen wird, wobei die Verbindungsstelle (10) als "OK"-Verbindung klassifiziert wird, wenn die Summe im Referenzintervall liegt, andernfalls wird die Verbindungsstelle (10) als "Nicht OK"-Verbindung klassifiziert.

2. Verfahren nach Anspruch 1, **dadurch gekennzeichnet, dass** die Vorschrift als eine Subtraktion der Temperaturwerte der korrespondierenden Teilbereiche des Prüfbildes und des Referenzbildes ausgebildet ist, insbesondere wird der Temperaturwert des Teilbereichs des Referenzbildes vom Temperaturwert des Teilbereichs des Prüfbildes subtrahiert.

3. Verfahren nach einem der vorangehenden Ansprüche, **dadurch gekennzeichnet, dass** die vordefinierte Zeitspanne so gewählt ist, dass zum zweiten Erfassungszeitpunkt (44) noch Temperaturunterschiede innerhalb der Kopffläche (20a, 20b) bei einer "Nicht OK"-Verbindung vorliegen, insbesondere durch Auswertung des Temperaturverlaufs einer "OK"-Verbindung.

4. Verfahren nach einem der vorangehenden Ansprüche, **dadurch gekennzeichnet, dass** zur Bestimmung des zweiten Erfassungszeitpunkts (44) der Temperaturänderungsverlauf einer "OK"-Verbindung ab dem Anregungszeitpunkt eines Teilbereichs oder der Mittelwert von zumindest zwei Teilbereichen des Auswertebereichs wenigstens so lange generiert wird, bis die Steigung des Temperaturänderungsverlaufs negativ wird, wobei insbesondere das Temperaturintervall auf Basis des Temperaturänderungsverlaufs ermittelt wird.

5. Verfahren nach Anspruch 4, **dadurch gekennzeichnet, dass** der zweite Erfassungszeitpunkt (44) dem Zeitpunkt der maximalen Temperaturänderung des Temperaturänderungsverlaufs entspricht, wobei die maximale Temperaturänderung insbesondere größer gleich 2 K ist.

6. Verfahren nach einem der vorangehenden Ansprüche, **dadurch gekennzeichnet, dass** der "Gut"-Wert bei einer Temperaturänderung von größer gleich 5 bis 10 Kelvin eines Pixels zugeordnet wird.

7. Verfahren nach einem der vorangehenden Ansprüche, **dadurch gekennzeichnet, dass** der Temperaturverlauf unter den Umgebungsbedingungen, die bei der Aufnahme des Prüfbilds vorliegen, generiert wird, wobei insbesondere die Wirkfläche zentrisch zu der Kopffläche (20a, 20b) angeordnet ist.

8. Verfahren nach einem der vorangehenden Ansprüche, **dadurch gekennzeichnet, dass** die Wirkfläche und die Wärmebildkamera (34) fluchtend angeordnet sind, wobei insbesondere die Positionierung der Wirkfläche anhand einer Konturerkennung der Kopffläche (20a, 20b) durch die Wärmebildkamera (34) erfolgt.

9. Verfahren nach einem der vorangehenden Ansprüche, **dadurch gekennzeichnet, dass** das Referenzintervall eine obere Intervallgrenze aufweist, die bevorzugt eine Toleranz von 10% der Summe der "Gut"-Werte der Referenzmessung ausgebildet ist.

10. Verfahren nach einem der vorangehenden Ansprüche, **dadurch gekennzeichnet, dass** der Auswertebereich ± 20% der Kopffläche (20a, 20b) entspricht, wobei insbesondere der Auswertebereich (42) anhand einer Berechnung basierend auf der Referenzmessung ermittelt wurde.

11. Verfahren nach einem der vorangehenden Ansprüche, **dadurch gekennzeichnet, dass** der Auswertebereich (42) zentrisch zur Kopffläche (20a, 20b) ausgebildet ist.

12. Verfahren nach einem der vorangehenden Ansprüche, **dadurch gekennzeichnet, dass** der Abstand des Induktors (36) zum Bauteilverbund so eingestellt wird, dass ein signifikanter Temperatureintrag im Bauteilverbund generiert wird.

13. Verfahren nach einem der vorangehenden Ansprüche, **dadurch gekennzeichnet, dass** ein Temperaturänderungsbild erzeugt wird und ein Filter auf das Temperaturänderungsbild angewendet wird, um externe Fehler herauszufiltern.

14. Verfahren nach einem der vorangehenden Ansprüche, **dadurch gekennzeichnet, dass** der Bauteilverbund als eine Mischbau-Fügeverbindung ausgebildet ist, wobei insbesondere die Basislage (14) aus Stahl und die Decklage (16) aus Aluminium ausgebildet ist, wobei insbesondere die Basislage (14) eine Dicke von 0,8 - 2 mm und die Decklage (16) eine Dicke von 1,0 - 4 mm aufweist.

15. Verfahren nach einem der vorangehenden Ansprüche, **dadurch gekennzeichnet, dass** das Verbindungselement (12a, 12b) als ein Reibelement ausgebildet ist.

## Claims

1. Method for non-destructively testing a connection point (10) in a component assembly, comprising a base layer (14) and at least one cover layer (16), and a connection element (12a, 12b) with a head (18a, 18b) and a shaft (22a, 22b), which connection point (10) is formed between the shaft (22a, 22b) of the connection element (12a, 12b) and the base layer (14), wherein the cover layer (16) has a thermal conductivity which is greater than that of the base layer (14) and of the connection element (12a, 12b), wherein the test is carried out by means of a thermal imaging camera (34) and an inductor (36) arranged on the component assembly side opposite the thermal imaging camera (34), wherein the inductor (36) inductively excites the base layer (14) at an excitation time by means of a pulse via an active surface, furthermore:
• at a first detection time, a reference image of the connection point (10) is captured by the thermal imaging camera (34), with the head (18a, 18b) being imaged as a head surface (20a, 20b);
• at a second detection time (44), a test image analogous to the reference image is captured, which second detection time (44) is after the first detection time and a predefined period of time after the excitation time;
• an evaluation area (42) is defined in the test image and/or in the reference image, wherein the evaluation area (42) at least partly comprises the head surface (20a, 20b), and wherein the evaluation area (42) is divided into sub-areas, in particular pixels, which sub-areas are assigned a temperature value;
• a temperature change value is formed using a rule on the basis of the temperature values of the corresponding sub-areas of the reference and test images;
• on the basis of the temperature change value, an "OK" value is formed if the temperature change lies within a pre-defined temperature interval with at least one lower boundary;
• the connection point (10) is classified in that the sum of the sub-areas with an "OK" value is compared with a reference interval with at least one predetermined lower interval boundary, with the connection point (10) being classified as an "OK" connection if the sum lies within the reference interval, otherwise the connection point (10) is classified as a "not OK" connection.

2. Method of claim 1, **characterized in that** the rule is designed as a subtraction of the temperature values of the corresponding partial areas of the test image and of the reference image, in particular the temperature value of the partial area of the reference image is subtracted from the temperature value of the partial area of the test image.

3. Method as claimed in any one of the preceding claims, **characterized in that** the predefined time interval is selected such that, at the second detection time (44), there are still temperature differences within the head surface (20a, 20b) in the case of a "not OK" connection, in particular by evaluating the temperature profile of an "OK" connection.

4. Method as claimed in any one of the preceding claims, **characterized in that,** in order to determine the second detection time (44), the temperature change curve of an "OK" connection from the excitation time of a partial area, or the mean value of at least two partial areas of the evaluation area, is generated at least until the slope of the temperature change curve becomes negative, wherein, in particular, the temperature interval is determined on the basis of the temperature change curve.

5. Method as claimed in claim 4, **characterized in that** the second detection time (44) corresponds to the time of the maximum temperature change of the temperature change curve, which maximum temperature change is in particular greater than or equal to 2 K.

6. Method as claimed in any one of the preceding claims, **characterized in that** the "OK" value is assigned at a temperature change of greater than or equal to between 5 and 10 Kelvin of a pixel.

7. Method as claimed in any one of the preceding claims, **characterized in that** the temperature curve is generated under the ambient conditions prevailing when the test image is taken, wherein in particular the active surface is arranged centrally to the head surface (20a, 20b).

8. Method as claimed in any one of the preceding claims, **characterized in that** the active surface is aligned with the thermal imaging camera (34), wherein in particular positioning of the active surface is carried out by means of contour recognition of the head surface (20a, 20b) by the thermal imaging camera (34).

9. Method as claimed in any one of the preceding claims, **characterized in that** the reference interval has an upper interval boundary, which boundary is formed by a tolerance of 10% of the sum of the "OK" values of the reference measurement.

10. Method as claimed in any one of the preceding claims, **characterized in that** the evaluation range corresponds to ± 20% of the head surface (20a, 20b), wherein in particular the evaluation range (42) was determined by means of a calculation based on the reference measurement.

11. Method as claimed in any one of the preceding claims, **characterized in that** the evaluation area (42) is formed centrally relative to the head surface (20a, 20b).

12. Method as claimed in any one of the preceding claims, **characterized in that** the distance of the inductor (36) from the component assembly is set such that a significant temperature input is generated in the component assembly.

13. Method as claimed in any one of the preceding claims, **characterized in that** a temperature change image is generated, and that a filter is applied to the temperature change image to filter out external errors.

14. Method as claimed in any one of the preceding claims, **characterized in that** the component assembly is in the form of a mixed construction joint connection, with in particular the base layer (14) being made of steel and the top layer (16) being made of aluminum, the base layer (14) in particular having a thickness of between 0.8 mm and 2 mm, and the top layer (16) in particular having a thickness of between 1.0 mm and 4 mm.

15. Method as claimed in any one of the preceding claims, **characterized in that** the connection element (12a, 12b) is designed as a friction element.

## Revendications

1. Procédé pour le contrôle non destructif d'un point de raccordement (10) dans un assemblage de composants, comprenant une couche de base (14) et au moins une couche de recouvrement (16), et un élément de raccordement (12a, 12b) avec une tête (18a, 18b) et une tige (22a, 22b), dans lequel le point de raccordement (10) est réalisé entre la tige (22a, 22b) de l'élément de raccordement (12a, 12b) et la couche de base (14), dans lequel la couche de recouvrement (16) présente une conductivité thermique qui est supérieure à celle de la couche de base (14) et de l'élément de raccordement (12a, 12b), dans lequel le contrôle s'effectue au moyen d'une caméra thermique (34) et d'un inducteur (36) disposé sur le côté de l'assemblage de composants opposé à la caméra thermique (34), dans lequel l'inducteur (36) excite par induction la couche de base (14) par l'intermédiaire d'une surface active à un instant d'excitation au moyen d'une impulsion, en outre :
• à un premier instant de détection une image de référence du point de raccordement (10) est enregistrée avec la caméra thermique (34), dans laquelle la tête (18a, 18b) est représentée en tant que surface de tête (20a, 20b) ;
• à un deuxième instant de détection (44) une image de contrôle analogue à l'image de référence est enregistrée, dans lequel le deuxième instant de détection (44) se situe après le premier instant de détection et un laps de temps prédéfini après l'instant d'excitation ;
• une région d'analyse (42) est définie dans l'image de contrôle et dans l'image de référence, dans lequel la région d'analyse (42) comprend au moins en partie la surface de tête (20a, 20b), et dans lequel la région d'analyse (42) est divisée en régions partielles, en particulier des pixels, dans lequel une valeur de température est associée aux régions partielles ;
• une valeur de changement de température est formée à l'aide d'une règle à partir des valeurs de température des régions partielles correspondantes de l'image de référence et de contrôle ;
• une valeur « correct » est formée à partir de la valeur de changement de température, lorsque le changement de température se situe dans un intervalle de température prédéfini avec au moins une limite inférieure ;
• un classement du point de raccordement (10) est effectué en comparant la somme des régions partielles avec une valeur « correct » avec un intervalle de référence avec au moins une limite d'intervalle inférieure prédéfinie, dans lequel le point de raccordement (10) est classé comme raccordement « OK » lorsque la somme se situe dans l'intervalle de référence, sinon le point de raccordement (10) est classé comme raccordement « non OK ».

2. Procédé selon la revendication 1, **caractérisé en ce que** la règle est réalisée comme une soustraction des valeurs de température des régions partielles correspondantes de l'image de contrôle et de l'image de référence, en particulier la valeur de température de la région partielle de l'image de référence est soustraite de la valeur de température de la région partielle de l'image de contrôle.

3. Procédé selon l'une quelconque des revendications précédentes, **caractérisé en ce que** le laps de temps prédéfini est choisi de sorte qu'au deuxième instant de détection (44) des différences de température à l'intérieur de la surface de tête (20a, 20b) dans le cas d'un raccordement « non OK » sont encore présentes, en particulier par analyse de la variation de température d'un raccordement « OK ».

4. Procédé selon l'une quelconque des revendications précédentes, **caractérisé en ce que** pour la détermination du deuxième instant de détection (44) la variation de changement de température d'un raccordement « OK » à partir de l'instant d'excitation d'une région partielle ou la valeur moyenne d'au moins deux régions partielles de la région d'analyse est générée au moins jusqu'à ce que la pente de la variation de changement de température soit négative, dans lequel en particulier l'intervalle de température est établi sur la base de la variation de changement de température.

5. Procédé selon la revendication 4, **caractérisé en ce que** le deuxième instant de détection (44) correspond à l'instant du changement de température maximal de la variation de changement de température, dans lequel le changement de température maximal est en particulier supérieur ou égal à 2 K.

6. Procédé selon l'une quelconque des revendications précédentes, **caractérisé en ce que** la valeur « correct » est associée dans le cas d'un changement de température supérieur ou égal à 5 à 10 Kelvin d'un pixel.

7. Procédé selon l'une quelconque des revendications précédentes, **caractérisé en ce que** la variation de température dans les conditions ambiantes, qui sont présentes lors de l'enregistrement de l'image de contrôle, est générée, dans lequel en particulier la surface active est disposée de manière centrale par rapport à la surface de tête (20a, 20b).

8. Procédé selon l'une quelconque des revendications précédentes, **caractérisé en ce que** la surface active et la caméra thermique (34) sont disposées en alignement, dans lequel en particulier le positionnement de la surface active s'effectue à l'aide d'une détection de contour de la surface de tête (20a, 20b) par la caméra thermique (34).

9. Procédé selon l'une quelconque des revendications précédentes, **caractérisé en ce que** l'intervalle de référence présente une limite d'intervalle supérieure, qui est réalisée de préférence par une tolérance de 10 % de la somme des valeurs « correct » de la mesure de référence.

10. Procédé selon l'une quelconque des revendications précédentes, **caractérisé en ce que** la région d'analyse correspond à ± 20 % de la surface de tête (20a, 20b), dans lequel en particulier la région d'analyse (42) a été établie à l'aide d'un calcul sur la base de la mesure de référence.

11. Procédé selon l'une quelconque des revendications précédentes, **caractérisé en ce que** la région d'analyse (42) est réalisée de manière centrale par rapport à la surface de tête (20a, 20b).

12. Procédé selon l'une quelconque des revendications précédentes, **caractérisé en ce que** la distance de l'inducteur (36) par rapport à l'assemblage de composants est réglée de sorte qu'un apport de température notable est généré dans l'assemblage de composants.

13. Procédé selon l'une quelconque des revendications précédentes, **caractérisé en ce qu'**une image de changement de température est produite et un filtre est appliqué sur l'image de changement de température, afin d'éliminer des erreurs externes par filtration.

14. Procédé selon l'une quelconque des revendications précédentes, **caractérisé en ce que** l'assemblage de composants est réalisé comme une liaison de jonction mixte, dans lequel en particulier la couche de base (14) est réalisée en acier et la couche de recouvrement (16) en aluminium, dans lequel en particulier la couche de base (14) présente une épaisseur de 0,8 - 2 mm et la couche de recouvrement (16) une épaisseur de 1,0 - 4 mm.

15. Procédé selon l'une quelconque des revendications précédentes, **caractérisé en ce que** l'élément de raccordement (12a, 12b) est réalisé comme un élément de friction.
